# DEMANDE DE BREVET EUROPEEN

(11) **EP 0 536 038 A1**
(43) Date de publication de la demande: **07.04.1993**
(21) Numéro de dépôt: 92402662.8
(22) Date de dépôt: 29.09.1992
(51) Int. Cl.: F02M 35/08, F01N 5/04

(54) **Dispositif d'aspiration permettant l'évacuation, dans la ligne d'échappement d'un moteur à combustion interne de poussières contenues dans l'air d'admission de ce moteur, et ligne d'échappement comportant un tel dispositif**

(30) Priorité: 02.10.1991 FR 9112132
(71) Demandeur: RENAULT VEHICULES INDUSTRIELS Société Anonyme dite:, F-69003 Lyon (FR)
(72) Inventeur: Michel, Bernard, F-69390 Vernaison (FR)
(74) Mandataire: Ernst-Schonberg, Michel

(57) **Abrégé**

La présente invention concerne un dispositif d'aspiration (2) permettant l'évacuation, dans une ligne d'échappement (1) d'un moteur à combustion interne, de poussières contenues dans l'air d'admission de ce moteur, ce dispositif étant constitué successivement, dans le sens d'écoulement des poussières, d'un tube (3) pénétrant dans la ligne d'échappement (1), d'un coude (4) et d'un divergent (5), les gaz d'échappement traversant, dans le nnême sens d'écoulement que les poussières, le passage laissé libre entre la paroi externe du divergent et la paroi interne de la ligne d'échappement. La présente invention concerne également une ligne d'échappement comportant un tel dispositif d'aspiration.

Application particulière aux moteurs à combustion interne équipés d'un filtre cyclonique.

## Description

La présente invention concerne un dispositif d'aspiration permettant l'évacuation, dans une ligne d'échappement d'un moteur à combustion interne, de poussières contenues dans l'air d'admission de ce moteur, et une ligne d'échappement comportant un tel dispositif.

L'air d'admission est en effet pris à l'extérieur du moteur puis filtré, à l'aide d'un filtre, avant son introduction dans le moteur. Dans le cas d'un filtre cyclonique les poussières retenues par le filtre sont évacuées dans la ligne d'échappement par un dispositif dit d'aspiration.

Les dispositifs d'aspiration actuellement utilisés sur les véhicules routiers équipés d'un filtre cyclonique, sont constitués d'un ensemble convergent-divergent installé dans la ligne d'échappement du moteur, et d'un tuyau raccordé, à une extrémité au filtre cyclonique, et à son autre extrémité à un orifice situé environ à la jonction entre le convergent et le divergent, et perpendiculairement à la ligne d'échappement.

Les poussières sortent donc de cet orifice perpendiculairement à la ligne d'échappement, puis elles changent de direction à 90°, car elles sont entraînées dans le divergent par les gaz d'échappement s'écoulant également dans le sens convergent-divergent.

De tels dispositifs d'aspiration ne sont pas très performants, car la dépression créée dans le divergent ne permet pas une aspiration complète des poussières contenues dans le filtre cyclonique.

De plus la réalisation de tels dispositifs est coûteuse, car il faut d'abord réaliser un ensemble convergent-divergent dans une ligne d'échappement adaptée, puis pratiquer un orifice à la jonction convergent-divergent.

La présente invention a pour but d'améliorer l'efficacité de l'aspiration tout en diminuant le coût de fabrication.

Ces deux buts sont atteints en réalisant un dispositif d'aspiration comportant un divergent réservé uniquement aux poussières, les gaz d'échappement passant dans l'espace laissé libre entre la paroi externe du divergent et la paroi interne de la ligne d'échappement. La réduction de la section de passage des gaz d'échappement, obtenue par la mise en place du divergent, crée en aval de celui-ci, une dépression qui facilite l'aspiration des poussières. En outre ce divergent, réservé aux poussières, est raccordé à un simple coude, ce qui permet de monter un tel dispositif d'aspiration sur des lignes d'échappement existantes.

La présente invention a pour objet un dispositif d'aspiration permettant l'évacuation, dans une ligne d'échappement d'un moteur à combustion interne, de poussières contenues dans l'air d'admission de ce moteur.

Selon l'invention, ce dispositif d'aspiration est constitué successivement, dans le sens d'écoulement des poussières, d'un tube pénétrant dans la ligne d'échappement, d'un coude et d'un divergent, les gaz d'échappement traversant, dans le même sens d'écoulement que les poussières, le passage laissé libre entre la paroi externe du divergent et la paroi interne de la ligne d'échappement.

Selon une variante de réalisation, le divergent est prolongé, dans le sens de l'écoulement des poussières, par une partie cylindrique.

De préférence, le tube est perpendiculaire à la ligne d'échappement, le coude étant alors un coude à 90°, l'axe du divergent étant parallèle à l'axe de la ligne d'échappement.

Selon un premier mode de réalisation, cet axe du divergent peut être confondu avec l'axe de la ligne d'échappement, la section de passage des gaz d'échappement, autour du divergent, étant alors en forme de couronne.

Selon un deuxième mode de réalisation, cet axe du divergent peut ne pas être confondu avec l'axe de la ligne d'échappement, ce qui permet de placer l'extrémité du divergent en appui sur la face interne de la ligne d'échappement.

La présente invention a également pour objet une ligne d'échappement comportant un dispositif d'aspiration selon l'invention.

Il est décrit ci-après, à titre d'exemple et en référence aux dessins annexés, un dispositif d'aspiration selon l'invention, installé dans une ligne d'échappement.

La figure 1 montre un premier mode de réalisation du dispositif d'échappement selon l'invention.

La figure 2 montre un deuxième mode de réalisation du dispositif d'échappement selon l'invention.

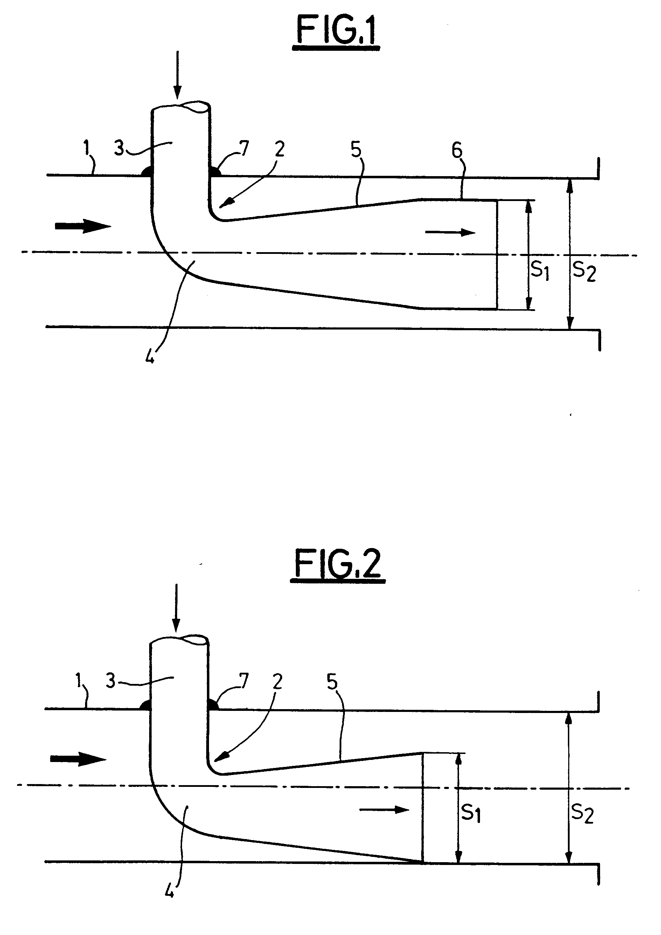

Dans la figure 1 sont représentés une ligne d'échappement 1 constituée par une tubulure à section circulaire, et un dispositif d'aspiration 2 constitué successivement d'un tube 3, d'un coude 4, d'un divergent 5, et d'une partie cylindrique 6.

Cette partie cylindrique 6 n'est pas obligatoire mais elle permet néanmoins d'améliorer encore l'efficacité de l'aspiration.

Le tube 3, le coude 4, le divergent 5 et la partie cylindrique 6 sont généralement réalisés en tôle, et peuvent être obtenus par tout procédé de façonnage de tôle tel que le repoussage, le cintrage etc... Ces différentes parties du dispositif sont reliées entre elles par tout moyen classique tel que par exemple la soudure. Ces différentes parties peuvent être réalisées en un nombre quelconque de pièces.

Le tube 3 traverse la paroi de la tubulure 1 et, dans cet exemple de la figure 1, perpendiculairement à l'axe principal de cette tubulure 1. Le tube 3 est raccordé à la tubulure 1 par l'intermédiaire d'un cordon de soudure extérieur 7.

Le divergent 5 est, dans cet exemple de la figure 1, coaxial à la tubulure 1, ce qui correspond au premier mode de réalisation.

Des dimensions préférentielles des différentes pièces seraient, par exemple, de 40 mm pour le diamètre du tube 3, de 77 mm pour la partie de plus grand diamètre du divergent 5, la pente du divergent étant de 7 %, et de 104 mm pour le diamètre de la ligne d'échappement. Enfin le tube 3 peut être placé à une distance comprise entre 600 et 3000 mm de l'extrémité de la tubulure 1.

La section de la tubulure 1 est référencée S₂, et la section du divergent 5 et de la partie cylindrique 6 prolongeant le divergent 5 est référencée S₁, la section de passage des gaz d'échappement étant alors représentée par la différence S₂ - S₁.

La figure 2 montre le deuxième mode de réalisation, dans lequel le divergent 5, non prolongé par une partie cylindrique, n'est pas coaxial avec la tubulure d'échappement 1, mais seulement parallèle, l'extrémité de grand diamètre du divergent étant en appui sur la face interne de la tubulure 1.

La section de passage des gaz à l'extrémité de grand diamètre du divergent 5, n'est donc pas en forme de couronne mais en forme de "croissant".

Toutes les combinaisons sont bien entendu possibles, c'est-à-dire que le mode de la figure 1, peut ne pas comporter de partie cylindrique, tandis que le mode de réalisation de la figure 2 peut comporter une telle partie cylindrique.

Pour toutes ces combinaisons, le rapport des sections Si sur S₂ permet d'ajuster la dépression obtenue et la perte de charge générée dans la tubulure 1, et la pente du divergent de 7 % permet d'éviter tout décollement de la couche limite.

De tels conduits d'aspiration se montent aisément dans des lignes d'échappement existantes moyennant une simple adaptation ou dans des lignes d'échappement prévues à cet effet.

## Revendications

1. Dispositif d'aspiration (2) permettant l'évacuation, dans une ligne d'échappement (1) d'un moteur à combustion interne, de poussières contenues dans l'air d'admission de ce moteur, caractérisé en ce qu'il est constitué successivement, dans le sens d'écoulement des poussières, d'un tube (3) pénétrant dans la ligne d'échappement (1), d'un coude (4) et d'un divergent (5), les gaz d'échappement traversant, dans le même sens d'écoulement que les poussières, le passage laissé libre entre la paroi externe du divergent et la paroi interne de la ligne d'échappement.

2. Dispositif selon la revendication 1, caractérisé en ce que le divergent (5) est prolongé, dans le sens d'écoulement des poussières, par une partie cylindrique (6).

3. Dispositif selon la revendication 1 ou 2, caractérisé en ce que le tube (3) est placé perpendiculairement à la ligne d'échappement (1), le coude (4) étant alors un coude à 90°, l'axe du divergent (5) étant parallèle à l'axe de la ligne d'échappement (1).

4. Dispositif selon la revendication 3, caractérisé en ce que l'axe du divergent (5) et l'axe de la ligne d'échappement (1) sont confondus, la section de passage des gaz d'échappement, autour du divergent (5), étant alors en forme de couronne.

5. Dispositif selon la revendication 3, caractérisé en ce que l'axe du divergent (5) n'est pas confondu avec l'axe de la ligne d'échappement (1).

6. Dispositif selon la revendication 5, caractérisé en ce que l'extrémité du divergent (5) est en appui sur la face interne de la ligne d'échappement (1).

7. Dispositif selon l'une des revendications 1 à 6, caractérisé en ce que le tube (3) est raccordé à la ligne d'échappement (1) par un cordon de soudure (7) extérieur.

8. Ligne d'échappement, caractérisée en ce qu'elle comporte un dispositif d'aspiration selon l'une des revendications 1 à 7.
